## Europäisches Patentamt
## European Patent Office
## Office européen des brevets

(11) Publication number: **0 149 270**
**B1**

# (12) EUROPEAN PATENT SPECIFICATION

(45) Date of publication of patent specification: **29.06.88**

(21) Application number: **84201811.1**

(22) Date of filing: **05.12.84**

(51) Int. Cl.⁴: $G\ 02\ B\ 5/18$, $G\ 02\ B\ 6/12$, $G\ 02\ B\ 6/30$

(54) Reflection grating.

(30) Priority: **15.12.83 NL 8304311**

(43) Date of publication of application:
**24.07.85 Bulletin 85/30**

(45) Publication of the grant of the patent:
**29.06.88 Bulletin 88/26**

(84) Designated Contracting States:
**DE FR GB IT SE**

(56) References cited:
**EP-A-0 006 052**
**US-A-3 698 795**
**US-A-4 153 330**
**US-A-4 403 825**
**PATENTS ABSTRACTS OF JAPAN, vol. 7, no. 121 (P-199)1266r, 25th May 1983; & JP-A-58 40506 (NIPPON DENSHIN DENWA KOSHA) 09-03-1983**
**ECOC, 1982, pages 321-324, Cannes, FR; IEEE TRANSACTIONS ON MICROWAVE THEORY AND TECHNIQUES, vol. MTT-21, no. 12, December 1973, pages 775-785; W.S.C. CHANG: "Periodic structures and their application in integrated optics"**

(73) Proprietor: **N.V. Philips' Gloeilampenfabrieken**
**Groenewoudseweg 1**
**NL-5621 BA Eindhoven (NL)**

(72) Inventor: **Nicia, Antonius Josephus Adrianus c/o INT. OCTROOIBUREAU B.V. Prof. Holstlaan 6 NL-5656 AA Eindhoven (NL)**

(74) Representative: **Cobben, Louis Marie Hubert et al INTERNATIONAAL OCTROOIBUREAU B.V. Prof. Holstlaan 6 NL-5656 AA Eindhoven (NL)**

Courier Press, Leamington Spa, England.

## Description

The invention relates to a reflection grating and to an optical multiplexer or demultiplexer provided with such a grating.

Such a reflection grating is suitable for use in optical telecommunication systems equipped with light-conducting fibres. A multiplexer or demultiplexer provided with a reflection grating is used on the transmitting or receiving end of a glass-fibre communication system in order to combine light beams of different wavelengths into one beam or to split said one beam into beams of different wavelengths.

Alternatively, a transmission grating in the form of a so-called Bragg deflector may be employed as a beam-splitting or a beam-combining element. However, a reflection grating has the advantage that a so-called Littrow configuration can be realized, in which configuration the light input fibre(s) is (are) disposed in the immediate vicinity of the light input fibre(s).

The article "Grating demultiplexer with printed geodesic. lens in glass", published in "Techn. Digest of the 8th ECOC", Cannes 1982, pages 321—324, describes the use of a reflection grating in an optical demultiplexer. This demultiplexer comprises a planar lens in the form of a so-called geodesic lens. A planar optical element may be defined as an optical element comprising a light-conducting layer deposited on a substrate, which layer has a reflective index which differs from that of the substrate and is formed with a specific structure to realize an optical function. The structure may be constituted by a depth profile or a refractive-index profile. The refractive-index profile can be obtained by ion-bombardment or by ion-exchange in a salt solution. A geodesic lens is a planar lens constituted by a depth profile on which a light-conducting layer of constant refractive index has been deposited. In the demultiplexer described in said article the reflection grating is a conventional grating which is arranged against the edge of the substrate of the geodesic lens and whose grating lines extend perpendicularly to the plane of the thin-film conductor. This grating is not integrated with the other components of the optical circuit, which circuit, apart from the geodesic lens, also comprises the input and the output fibres. The fact that the reflection grating is not integrated has several disadvantages. For example, during assembly of the optical circuit the reflection grating must be aligned accurately relative to the light-conducting fibres. Further, the components should comprise adjusting means. Moreover, a demultiplexer with a separate grating is more bulky than and less stable than a fully integrated demultiplexer.

It is an object of the present invention to provide a reflection grating which is integrable in a planar optical circuit. According to the invention the reflection grating is characterized in that it comprises a double periodic structure of elongate areas which are situated at a constant distance from one another in or on a light-conducting layer deposited on a substrate, which areas exhibit periodic excursions in their longitudinal directions, corresponding portions of the areas extending parallel to each other.

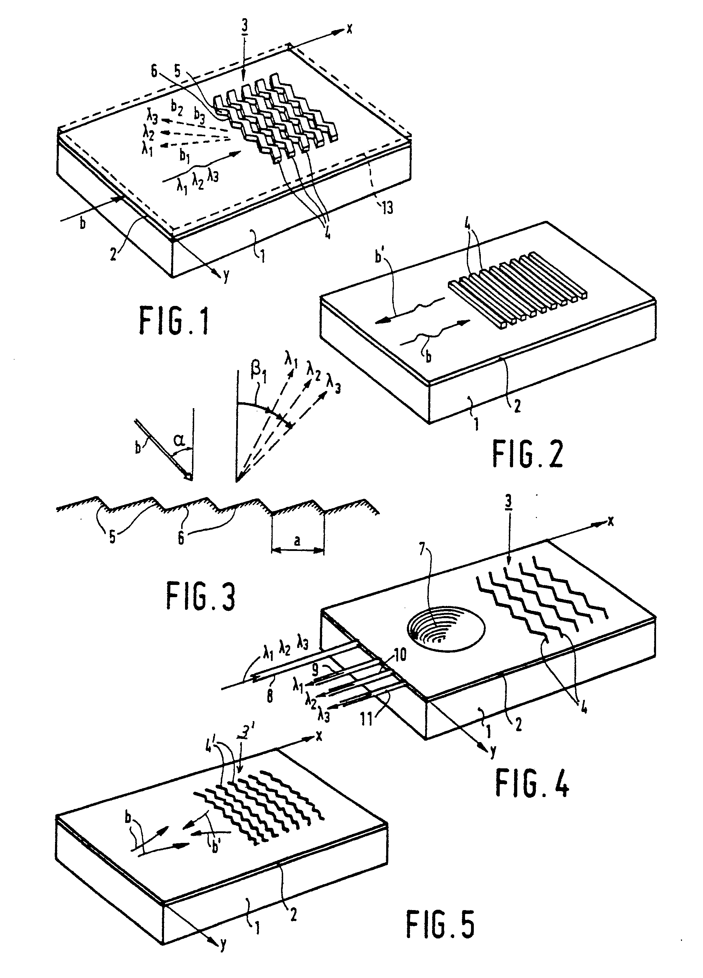

The invention is based on the recognition of the fact that a structure which functions as a diffraction grating may be superimposed on a known structure comprising a plurality of parallel elongate areas which operates as a planar reflector as is described in: "IEEE Transactions on Microwave Theory and Techniques", Vol. MTT—21, No. 12, December 1973, pages 775—785, in particular Fig. 5, the two structures together operating as a planar reflection grating.

The planar reflection structure may be a surface profile in the light-conducting layer. Such a profile structure can be formed with the required accuracy using techniques employed for the manufacture of photomasks in integrated-circuit fabrication, such as electron-beam lithography.

Alternatively, the planar grating may comprise areas which have a refractive index which differs from that of the light-conducting layer. Such a structure can be obtained for example by means of ion implantation or ion exchange.

The reflection grating in accordance with the invention is very suitable for use in an optical multiplexer or demultiplexer. This multiplexer (demultiplexer) may comprise a planar lens which ensures that a beam which is incident on the grating is a parallel beam. However, for this purpose the elongate areas preferably have arcuate shapes, so that the reflection grating can perform the lens function, and a separate lens is not needed.

The invention will now be described in more detail, by way of example, with reference to the drawing. In the drawing:

Fig. 1 shows a planar reflection grating in accordance with the invention,

Fig. 2 and Fig. 3 show the two structures by means of which this grating is formed,

Fig. 4 shows a first optical multiplexer (demultiplexer) embodying the invention, and

Fig. 5 shows a second multiplexer (demultiplexer) embodying the invention.

The reflection grating shown in Fig. 1 comprises a periodic structure 3 on a thin light-conducting layer 2 deposited on a substrate 1. The substrate is made of, for example glass, a transparent plastics, a semiconductor material or a crystal, such a lithium-niobate. The light conducting layer is a monomode light conductor and has a thickness of approximately 1 μm. This layer is made of a transparent material whose refractive index is higher than that of the substrate. As a result of this, most of the radiation energy of a beam b which enters at the left will remain within the light-conducting layer 2. This beam is reflected by the reflection structure 3 and, if the beam b comprises a plurality of wavelength bands $\lambda_1$, $\lambda_2$, $\lambda_3$, is split into a plurality of sub-beams $b_1$, $b_2$ and $b_3$ of one specific wavelength band each.

The structure 3 may be thought of as comprising the two structures shown in Figs. 2 and 3. Fig. 2 shows a periodic structure of elongate straight areas 4. As described in the article: "Periodic Structures and their Application in Integrated Optics" in: "IEEE Transactions on Microwaves Theory and Techniques", Vol. MTT—21, December 1973, pages 775—785, such a structure functions as a reflector. Each of the elongate conductors may be regarded as an element which disturbs the propagation of the radiation in the light-conducting layer, so that only part of the radiation follows its original path and remainder is reflected or emerges from the boundary surfaces of the layer. By arranging a plurality of such elements at the correct distance from each other and with the correct geometry the reflected radiation components can be arranged to augment each other and the other components to suppress each other, so that the sequence of elongate areas acts as a reflector. The said IEEE article describes how to compute the correct geometry of the periodic structure to obtain this effect.

Fig. 3 shows a known reflection grating comprising grooves which extend perpendicularly to the plane of the drawing. These grooves have walls with a negative slope 5 and walls with a positive slope 6. A beam which is incident on this grating is split into a plurality of sub-beams each of which propagates in a direction $\beta_m$, $\beta_m$ being defined by the grating law:

$$a.\ (\sin\alpha + \sin\beta_m) = m\lambda,$$

where $\alpha$ is the angle at which the beam is incident on the grating, $m$ the order number of the beam, $a$ the grating period, and $\lambda$ the wavelength of the radiation. The grating may be constructed so that most of the radiation energy is contained in the first order. Within this first order with propagation direction $\beta_1$ the radiation components of different wavelengths are diffracted at different angles as is indicated by the broken-line arrows in Fig. 3.

In accordance with the invention each elongate area of Fig. 2 is given the shape as shown in Fig. 3 to form the double periodic structure 3 shown in Fig. 1. In the X-direction a wave which propagates in the light-conducting layer 2 essentially sees the structure of Fig. 2, so that this wave is reflected. Owing to the presence of the periodic structure which extends in the Y-direction and which comprises projecting and receding portions 5 and 6 of the ridges, the periodic structure 3 also behaves as a diffraction grating which splits an incident beam of different wavelengths into a plurality of beams $b_1$, $b_2$, $b_3$, the direction of these beams being dependent on the wavelengths $\lambda_1$, $\lambda_2$, $\lambda_3$. Conversely, a plurality of beams of different wavelengths which are incident on the periodic structure 3 at the correct angles will be combined into one beam of the different wavelengths. The broad knowledge in the field of gratings and planar period structures as described in the literature enables the geometry of the double period structure 3 to be designed so that correct reflection and a high diffraction efficiency are achieved.

In the embodiment shown in Fig. 1 the double periodic surface profile comprises ridges on the light-conducting layer 2.

Instead of ridges the surface profile may comprise grooves. The surface profile need not be rectangular but may alternatively have a sinusoidal shape. Such profiles can be obtained using techniques employed in integrated-circuit fabrication.

Alternatively, the double periodic structure may comprise narrow strips of metal on the light-conducting layer. These strips behave as perturbing elements in a similar way as the ridges or the grooves.

The light-conducting layer may be provided with an additional layer 13 to protect the surface profile or the structure of metal strips.

Alternatively, the double periodic structure may be formed entirely within the light-conducting layer. The structure 3 then comprises areas with a refractive index which differs from that of the light-conducting layer 2. The desired refractive-index variation can be obtained by means of ion-bombardment or ion-exchange.

An important use of the planar reflection grating is in the field of integrated multiplexers and demultiplexers for use in conjunction with glass fibres. Such a multiplexer (demultiplexer), which is shown in Fig. 4, may comprise a substrate 1 on which a light-conducting layer 2 has been deposited. In addition to the reflecting grating shown in Fig. 1, a planar lens in the form of a geodesic lens 7 is formed in this layer. An input fibre 8 is coupled to the light-conducting layer, the axis of the fibre coinciding with a meridianal axis of the geodesic lens. This lens converts the beam which diverges from the fibre 8 into a parallel beam which is incident on the planar reflection grating 3. The beam components of different wavelengths are reflected so as to be routed to the various output fibres 9, 10 and 11 via the lens 7. Conversely, beams of different wavelengths which enter the light-conducting layer via the fibres 9, 10 and 11 will be combined to one beam which is directed towards the fibre 8.

The geodesic lens may comprise a rotationally symmetrical recess in the substrate, which recess is followed by the light-conducting layer of uniform thickness. Since the shape of the layer 2 changes at the location of the recess the directions of marginal rays of the beam will change, causing the part of the layer 2 at the location of the recess to act as a lens.

Alternatively, the planar lens may comprise a circular area with a refractive index which varies continuously in the radial direction.

A particularly advantageous embodiment of a multiplexer (demultiplexer) according to the invention is shown in Fig. 5. This multiplexer (demultiplexer) comprises only a planar reflection grating 3. The elongate areas 4' are now curved, so that viewed in the X-direction the structure 3' functions as a concave reflector, giving lens action. This structure reflects the diverging beam issuing from the fibre 8 as a converging beam. In the same way as described with reference to Fig. 1 the periodic excursions of the elongate areas diffract the reflected radiation in different directions as a function of the wavelength.

**Claims**

1. A reflection grating, characterized in that it comprises a double periodic structure of elongate areas which are situated at a constant distance from one another in or on a light conducting layer deposited on a substrate, which areas exhibit periodic excursions in their longitudinal directions, corresponding portions of the areas extending parallel to each other.

2. A reflection grating as claimed in Claim 1, characterized in that the double periodic structure comprises a profile in the surface of light-conducting layer.

3. A reflection grating as claimed in Claim 2, characterized in that the profile comprises ridges on the light-conducting layer.

4. A reflection grating as claimed in Claim 2, characterized in that the profile comprises grooves in the light-conducting layer.

5. A reflection grating as claimed in Claim 1, characterized in that the double periodic structure comprises metallic strips on the light-conducting layer.

6. A reflection grating as claimed in Claims 2, 3, 4 and 5, characterized in that the light-conducting layer with the double periodic structure is provided with a protective layer.

7. A reflection grating as claimed in Claim 1, characterized in that the double periodic structure comprises areas in the light-conducting layer which have a refractive index which differs from that of a light-conducting layer.

8. An optical multiplexer or demultiplexer comprising a planar lens and a reflection grating, characterized in that the reflection grating is a grating as claimed in any one of the Claims 1 to 7 and is formed in or on the light-conducting layer of the planar lens.

9. An optical multiplexer or demultiplexer, characterized in that it comprises a reflection grating as claimed in Claims 1 to 7, the elongate areas having a concave shape with respect to the light impinging thereon.

**Patentansprüche**

1. Reflexionsgitter, dadurch gekennzeichnet, dass es eine doppelt periodische Struktur länglicher Gebiete enthält, die in regelmässigem Abstand voneinander in oder auf einer Lichtleitschicht auf einem Substrat liegen, wobei diese Gebiete periodische Ausweichungen in ihren Längsrichtungen aufweisen, wobei entsprechende Abschnitte der Gebiete sich parallel zueinander erstrecken.

2. Reflexionsgitter nach Anspruch 1, dadurch gekennzeichnet, dass die doppelte periodische Struktur ein Profil in der Oberfläche der Lichtleitschicht enthält.

3. Reflexionsgitter nach Anspruch 2, dadurch gekennzeichnet, dass das Profil durch Rippen auf der Lichtleitschicht gebildet wird.

4. Reflexionsgitter nach Anspruch 2, dadurch gekennzeichnet, dass das Profil durch Rillen in der Lichtleitschicht gebildet wird.

5. Reflexionsgitter nach Anspruch 1, dadurch gekennzeichnet, dass die doppelte periodische Struktur durch Metallstreifen auf der Lichtleitschicht gebildet wird.

6. Reflexionsgitter nach Anspruch 2, 3, 4 oder 5, dadurch gekennzeichnet, dass die Lichtleitschicht mit der doppelten periodischen Struktur mit einer Schutzschicht versehen ist.

7. Reflexionsgitter nach Anspruch 1, dadurch gekennzeichnet, dass die doppelte periodische Struktur Gebiete in der Lichtleitschicht enthält, die einen Brechungsindex abweichend von dem der Lichtleitschicht haben.

8. Optischer Multiplexer oder Demultiplexer mit einer Planarlinse und einem Reflexionsgitter, dadurch gekennzeichnet, dass das Reflexionsgitter ein Gitter nach einem oder mehreren der Ansprüche 1 bis 7 und in oder auf der Lichtleitschicht der Planarlinse gebildet ist.

9. Optischer Multiplexer oder Demultiplexer, dadurch gekennzeichnet, dass er ein Reflexionsgitter nach einem der Ansprüche 1 bis 7 enthält, wobei die länglichen Gebiete eine konkave Form in bezug auf das auffallende Licht besitzen.

**Revendications**

1. Trame de réflexion, caractérisé en ce qu'elle est constituée par une structure à double période de régions allongées qui se situent à espacement constant les unes par rapport aux autres dans ou sur une couche conductrice de lumière déposée sur un substrat, régions qui présentent des excursions périodiques dans leur direction longitudinale, les parties correspondantes des régions s'étendant parallèlement entre elles.

2. Trame de réflexion selon la revendication 1, caractérisée en ce que la structure à double période est constituée par un profil dans la surface de la couche conductrice de lumière.

3. Trame de réflexion selon la revendication 2, caractérisée en ce que le profil est constituée par des nervures présentes sur la couche conductrice de lumière.

4. Trame de réflexion selon la revendication 2, caractérisée en ce que le profil est constitué par des rainures ménagées dans la couche conductrice de lumière.

5. Trame de réflexion selon la revendication 1, caractérisée en ce que la structure à double période est constituée par des bandes métalliques disposées sur la couche conductrice de lumière.

6. Trame de réflexion selon la revendication 2, 3, 4, et 5, caractérisée en ce que la couche conductrice de lumière présentant la structure à double période est munie d'une couche protectrice.

7. Trame de réflexion selon la revendication 1, caractérisée en ce que la structure à double période est constituée par des régions de la couche conductrice de lumière qui présentent un indice de réfraction qui diffère de celui de la couche conductrice de lumière.

8. Multiplexeur ou démultiplexeur optique comprenant une lentille planaire et une trame de réflexion, caractérisé en ce que la trame de réflexion est une trame selon l'une des revendications 1 à 7 et est formée dans ou sur la couche conductrice de lumière de la lentille planaire.

9. Multiplexeur ou démultiplexeur optique caractérisé en ce qu'il est constitué par une trame de réflexion selon la revendication 1 à 7, les régions allongées présentant une forme concave par rapport à la lumière parvenant sur lesdites régions.

FIG.1

FIG.2

FIG.3

FIG.4

FIG.5